# EUROPÄISCHE PATENTSCHRIFT

(11) **EP 2 023 479 B1**
(45) Veröffentlichungstag und Bekanntmachung des Hinweises auf die Patenterteilung: **16.04.2014**
(21) Anmeldenummer: 07113873.9
(22) Anmeldetag: 06.08.2007
(51) Int. Cl.: H02P 21/13, H02P 6/18

(54) **System zur nahtlosen Geschwindigkeits- und/oder Lageermittlung einschließlich Stillstand bei einem Permanentmagnet-Läufer einer elektrischen Maschine**
System for seamless velocity and/or location determination including standstill for a permanent magnet rotor of an electric machine
Dispositif destiné au calcul de la vitesse et/ou de l'emplacement sans fil incluant un arrêt pour un rotor magnétique permanent de machine électrique

(43) Veröffentlichungstag der Anmeldung: 11.02.2009
(73) Patentinhaber: BAUMÜLLER NÜRNBERG GMBH, D-90482 Nürnberg (DE)
(72) Erfinder: Götz, Fritz Rainer Dr. Ing., 90522 Oberasbach (DE); Barinberg, Viktor, Dr. Ing., 90491 Nürnberg (DE)
(74) Vertreter: Götz, Georg Alois

(56) Entgegenhaltungen:
- WO-A-2005/099082
- US-A- 6 163 127
- US-A1- 2004 189 240
- US-A1- 2005 151 502

## Beschreibung

Die Erfindung betrifft ein Verfahren zur Ermittlung der (elektrischen) Antriebs-Geschwindigkeit und/oder -Lage bei einem Permanentmagnetläufer einer elektrischen bürstenlosen Maschine. Es ist insbesondere zum Einsatz in einem Antriebsregelkreis geeignet. Für das Verfahren werden mehrphasige Strommessungen an der Maschine verwendet, woraus eine Geschwindigkeits-Ermittlung nahtlos über den gesamten Geschwindigkeitsbereich einschließlich Stillstand des Läufers durchgeführt wird. Für den höheren Geschwindigkeitsbereich wird ein mathematisches Maschinenmodell verwendet, in welchem aus der den Statorstrom beeinflussenden Läufer-Rück-EMK (elektromotorischen Kraft) auf die Läufergeschwindigkeit und/oder -Lage geschlossen und ein entsprechender Modell-Geschwindigkeitswert (und gegebenenfalls auch Lagewert) erzeugt wird. Für den niedrigeren Geschwindigkeitsbereich einschließlich Läufer-Stillstand wird ein (z. B. Spannungs-)Injektionsverfahren verwendet, bei dem stromführende Statorleiter mit einer Testsignalquelle (mit z. B. bestimmter Trägerfrequenz) gekoppelt werden. Die resultierenden Statorströme werden auf lageabhängige Anisotropien in der Magnetstruktur der elektrische28n Maschine hin ausgewertet und/oder gefiltert, wobei auf die Läufer-Geschwindigkeit und/oder -Lage geschlossen werden kann und ein entsprechender Injektions-Geschwindigkeitswert erzeugt wird. In einem Kombinationsglied oder -element erfolgt eine einander ergänzende Fusion der Modell- und Injektionsgeschwindigkeitswerte zur zu ermittelnden Antriebs-Geschwindigkeit, wobei korrespondierend mit der Zunahme der ermittelten Antriebs-Geschwindigkeit der Einfluss oder die Beiträge der Injektions-Geschwindigkeitswerte gegenüber denen der Modell-Geschwindigkeitswerte abgeschwächt werden. Die Erfindung betrifft ferner zur Durchführung dieses Verfahrens geeignete Lage- und/oder Geschwindigkeitsermittlungseinrichtungen, Fusionsmodule und Maschinen-Modellierungsmodule gemäß den jeweiligen ersten Teilen/Oberbegriffen der nebengeordneten, unabhängigen Ansprüche 7, 13 und 19.

Zur Ermittlung der Lage und Geschwindigkeit des Permanentmagnet-Läufers bei einem elektrischen, bürstenlosen Antriebsmotor wird in der AT-Fachzeitschrift "Elektrotechnik und Informationstechnik" Nr. 2/2000 "Geregelte Antriebe", auf Seiten 103-112 von M. Schrödl und E. Robeischl gelehrt, für höhere Drehzahlen (im Bereich über etwa 10 % bis 20 % der Nenndrehzahl) über ein EMK-Modell/Spannungsmodell von der Permanentmagnet-Synchronmaschine die beispielsweise für eine Antriebsregelung nötige Lage- und Drehzahlinformation in Echtzeit aus elektrischen Größen zu bestimmen. Die Läuferlageschätzung soll aufgrund der induzierten Spannung in der Statorwicklung durchgeführt werden, was die Stromregelung nicht beeinflusst. Der Grundgedanke dabei ist, die Änderung des Statorfluss-Verkettungsraumzeigers messtechnisch zu bestimmen. Durch Messung des Stromverlaufs im Stator beziehungsweise Ständer wird die Änderung des Permanentmagnetfluss-Raumzeigers aus dem Permanentmagnet-Läufer ermittelt. Ein System zur Ermittlung der Antriebs-Lage und/oder - Geschwindigkeit bei einer elektrischen, bürstenlosen Maschine, insbesondere Synchronmotor mit Permanentmagnet-Läufer, bei dem ebenfalls die von den Dauermagneten induzierte Rück-EMK erfasst und ausgewertet ist, ist aus S. M. A. Abu Sharkh, V. Barinberg "A new approach to rotor position estimation for a PM brushless motor drive", Mediterranean Electrotechnical Conference 1998, Seiten 1199-1203 bekannt. Danach erfolgt die Läufer-Lage- und/oder - Geschwindigkeitsschätzung ebenfalls nach einem EMK-/Spannungsmodell der elektrischen Maschine.

Die Erfassung und Auswertung der Läufer-Rück-EMK, wie gemäß obigen Ausführungen in der genannten Fundstelle in der AT-Fachzeitschrift gelehrt, funktioniert jedoch nur für den genannten, höheren Drehzahlbereich, wo die von den Dauermagneten auszuwertende, induzierte Spannung/Läufer-Rück-EMK noch genügend stark ist. Deshalb wird für den niedrigeren Drehzahlbereich (unterhalb von etwa 10-20 % der Nenndrehzahl) in der genannten Fundstelle der obigen AT-Fachzeitschrift vorgeschlagen, schwankende magnetische Leitwerte in Abhängigkeit von der Rotorstellung infolge magnetischer Sättigung vor allem der Zähne, aber auch des Jochs des Maschinen-Stators infolge hoher lokaler Flussdichten sowie gleichzeitig oder alternativ Reluktanzeffekte durch geometrisch bedingte Achsigkeiten beziehungsweise Axialitäten auszunutzen. In prinzipiell die gleiche Richtung geht der in US 7,180,262 B2 (A. CONSOLI) enthaltene Vorschlag, bei einer feldorientierten Vektorregelung die natürlichen oder induzierten Anisotropien in der magnetischen Struktur der elektrischen Maschine zu erfassen und auszuwerten. Zur Erfassung und Auswertung magnetischer Anisotropien beim niedrigen Drehzahlbereich zur Schätzung der Lage- und/oder Geschwindigkeit des Permanent-Magnet-Rotors wird in O. C. Ferreira, R. Kennel "Encoderless control of industrial servo drives", 12th International Power Electronics and Motion Control Conference, August 2006, Seiten 1962-1967 in dortiger Figur 4 eine Regelungsstruktur vorgeschlagen. Danach ist den Statorströmen ein hochfrequentes Testsignal bestimmter Trägerfrequenz einzuprägen beziehungsweise zu überlagern, und mittels eines Demodulators mit Bandpass und einem Nachführregler die Rotorposition zu ermitteln.

In der Fachwelt ist allgemein bekannt, dass Detektionsverfahren der Rotor-Lage und -Geschwindigkeit auf der Basis magnetischer Anisotropien mit Injektion von hochfrequenten Testsignalen in die Statorströme für höhere Drehzahlbereiche nicht zweckmäßig und nicht wünschenswert ist (vgl. z. B. "Sensorless Control of IPMSM Seamlessly Covering Entire Speed Range without Rotor Position Sensor" von Roman Filka, Peter Balazovic in Power Electronics Intelligent Motion, Power Quality. Proceedings of the International Conference (PCIM 2006), 30 May-01 June 2006, Nürnberg; US 7 026 772 B2 - J. Quirion). Von Roman Filkor et al wird deshalb vorgeschlagen, zur nahtlosen Abdeckung des gesamten Geschwindigkeitsbereichs beide Techniken - Detektion der Rotorlage und -geschwindigkeit mittels eines Maschinen/Spannungsmodells über die induzierte Rotor-Rück-EMK und mittels HF-Injektion von Testsignalen in die Statorströme und Detektion magnetischer Anisotropien daraus - zu kombinieren (vgl. Figur 3 in der genannten Fundstelle von R. Filka u.a.). Danach ist gemäß dortiger Figur 3 ein Block "Cross over merging algorithm" eingangsseitig sowohl mit einem "Saliency tracking observer" für magnetische Anisotropien als auch mit einem "state filter observer" für die Rotor-Rück-EMK verbunden. Ausgangsseitig werden generierten Werte für die Rotorlage und -geschwindigkeit ausgegeben.

In der oben genannten Fundstelle von M. Schrödl et al aus der AT-Fachzeitschrift ist in der dortigen Abbildung 6 die Kombination der Rotorlagemessung einerseits aus der Rotor-Rück-EMK über ein entsprechendes EMK-Modell und andererseits anhand von Maschinen-Induktivitätsparametern in Verbindung mit magnetischen Anisotropien näher dargestellt. Die aus beiden Schätzverfahren gewonnenen Geschwindigkeits- und Lagewerte werden additiv miteinander verknüpft und einem Zustandsmodell zugeführt.

Ein Verfahren und System etwa der oben im ersten Absatz genannten Art sind in US 7,026,772 B2 (Jean Quirion) beschrieben. Danach sind die Detektionsergebnisse aus einem Spannungs-/Maschinenmodell für die Rotor-Rück-EMK mit den Detektionsergebnissen eines Hochfrequenz-Injektionsverfahrens für Anisotropien in der magnetischen Struktur der elektrischen Maschine in einem so genannten Fusions-Algorithmus miteinander zu kombinieren bzw. zu "verschmelzen". Der Fusionsalgorithmus wird dahingehend konkretisiert (vgl. dortige Figuren 6 und 8), dass Informationen aus dem Ermittlungsverfahren sowohl mit dem Motormodell als auch mit dem Injektionsverfahren nahtlos über den gesamten Geschwindigkeitsbereich in einer Summierstelle zur Bildung eines Fehler- bzw. Abweichungssignals voneinander subtrahiert werden. Die Abweichung wird über einen nachfolgenden PI-Regler und Rückkopplung nur eines per Integration gewonnenen Lagewerts ausgeregelt, etwa nach Art einer PLL-Schaltung. Für zunehmende Geschwindigkeiten wird angeregt, die Einprägung des HF-Injektionssignals zu unterdrücken. Dadurch soll u. a. hörbares Rauschen verhindert werden. Im Zusammenhang mit der Unterdrückung der HF-Injektion bei zunehmenden Geschwindigkeiten wird noch die Wirkungsweise beschrieben, dass der Fusionsalgorithmus mehr auf der Basis der Läufer-Rück-EMK und weniger auf der Basis des HF-Injektionsverfahrens arbeitet. Dazu wird der Hinweis gegeben, die HF-Injektionserregung beim Statorstrom "herunterzudimmen".

Der Erfindung liegt die Aufgabe zugrunde, den Einfluss der Geschwindigkeitswerte, welche über Injektion eines Testsignals in den Statorstrom und Auswertung magnetischer Anisotropien gewonnen sind, mit zunehmender Maschinengeschwindigkeit effektiver zurückzudrängen. Zur Lösung wird auf das im Anspruch 1 angegebene Ermittlungsverfahren, auf die im Anspruch 7 angegebene Ermittlungseinrichtung, auf das im Anspruch 13 angegebene Fusionsmodul und auf das im Anspruch 19 angegebene Maschinen-Modellierungsmodul verwiesen. Optionale, vorteilhafte Weiterbildungen der Erfindung ergeben sich aus den abhängigen Ansprüchen.

Indem gemäß Erfindung die Injektions-Geschwindigkeitswerte, bevor sie mit den Modell-Geschwindigkeitswerten in dem Kombinationsglied fusioniert werden, mit einer Gewichtungsfunktion verknüpft werden, welche mit zunehmender Geschwindigkeit vorzugsweise betragsmäßig abnehmende Gewichtungsfaktoren produziert, lässt sich das Zurückdrängen und Unterdrücken der vom Injektionsverfahren generierten Ausgangswerte im höheren Geschwindigkeitsbereich erreichen, unabhängig davon, ob die am Statorleiter angekoppelte Testsignalquelle noch aktiv oder unterdrückt ist. Damit wird ein zuverlässigeres Zurückdrängen des Injektionsverfahrens bei höheren Geschwindigkeiten, wo das Injektionsverfahren zahlreiche, in der Fachwelt beschriebene Nachteile mit sich bringt, erreicht.

Ein weiterer, mit der Erfindung erzielbarer Vorteil besteht darin, dass im niedrigen Geschwindigkeitsbereich die Modell- und Injektionsgeschwindigkeitswerte einerseits aus dem Maschinenmodell und andererseits aus dem Injektionsverfahren sich einander stabilisierend ergänzen können. Die Injektions-Geschwindigkeitswerte werden mit bis zu 100 % steigender Gewichtung in die Fusion eingebracht, wobei parallel dazu die Modell-Geschwindigkeitswerte parallel in die Ermittlung der Antriebsgeschwindigkeit einfließen. Bei niedrigem Geschwindigkeitsbereich liefert das Injektionsverfahren gute Signale, welche den Ausgang des Motormodells so zusätzlich ergänzen, zumal aus dem Motormodell mit abnehmenden Geschwindigkeitswerten die Signale schlechter werden. Gleichwohl tragen auch in dem niedrigeren Geschwindigkeitsbereich die Geschwindigkeitswerte aus dem Maschinenmodell mit zur Gesamtberechnung der Antriebsgeschwindigkeit und gegebenenfalls -lage immer noch mit bei, wenn auch im verringerten Maße.

Zur Erzeugung der Gewichtungsfaktoren für die Abschwächung der Injektions-Geschwindigkeitswerte wird gemäß einer vorteilhaften Erfindungsausbildung eine Betragsbildungsfunktion verwendet. In weiterer, optionaler Ausgestaltung dieses Gedankens nimmt die Kurve der Betragsbildungsfunktion mit zunehmenden Beträgen des Arguments (hier: Antriebsgeschwindigkeit) ab. Die Abnahme kann zweckmäßig linear erfolgen.

Gemäß einer weiteren Erfindungsausbildung wird die Gewichtungs- bzw. Betragsbildungsfunktion so gestaltet, dass ab einer vorbestimmten Grenzgeschwindigkeit die Gewichtungsfaktoren nur noch Null betragen bzw. die Beiträge der Injektions-Geschwindigkeitswerte in die Gesamtberechnung vollständig unterdrückt werden. Zweckmäßig liegt die gewählte Grenzgeschwindigkeit im Bereich zwischen 3 und 10 % der Nenndrehzahl bei Rotationsmotoren. Eine solche Grenzgeschwindigkeit oder - drehzahl kann auch als Signal zur Abschaltung der Testsignalquelle von den Stator-Stromleitern verwendet werden. Damit lässt sich die Sicherheit vor solchen Störungen erhöhen, welche bei zunehmender Antriebsgeschwindigkeit und eingeschalteter Stator-Testsignalinjektion verschärft ausgelöst werden würden. Darüber hinaus werden ohmsche Wärmeverluste wegen dem Injektionsstrom vermieden

Gemäß einer optionalen Erfindungsausbildung lässt sich das Fusions-Kombinationsglied zweckmäßig als Summier- oder Additionsglied realisieren. Beim Addieren wird in besonders einfacher Weise die komplementäre Wechselwirkung zwischen Modell- und Injektionsgeschwindigkeitswerte erreicht. Bei niedrigen Geschwindigkeiten, wo die Läufer-Rück-EMK an sich zu schwach geworden ist, kann sie über die Modell-Geschwindigkeitswerte immer noch einen Beitrag zur Stabilisierung der Injektions-Geschwindigkeitswerte liefern, welche mit niedrigem Geschwindigkeitsbereich die Hauptbasis für die Geschwindigkeitsermittlung bilden.

Zur Unterdrückung hochfrequenter Störanteile besteht eine weitere, vorteilhafte Erfindungsausbildung darin, den Ausgang des Kombinationsglieds für ermittelte Antriebs-Geschwindigkeitswerte einer Filterung mit PT₁- oder Tiefpass-Charakteristik zu unterwerfen. Als zweckmäßige Eckfrequenz haben sich 100 Hz oder eine Zeitkonstante zwischen ein und zwei Millisekunden in der Praxis bewährt.

Es liegt im Rahmen der Erfindung, dass dem mathematischen Maschinenmodell als Eingangsvariable Längs- und Querkomponenten vom Strom und einer vorgegebenen Spannung eingegeben werden, die vorher jeweils in ein läuferbezogenes d,q-Koordinatensystem transformiert sind. Analog können im Rahmen des Injektionsverfahrens dem zugehörigen Demodulator mit Bandpass-Filter als Eingangsvariable Längs- und Querkomponenten vom Stator-Strom eingegeben werden, welche auch vorher in ein läuferbezogenes d,q-Koordinatensystem transformiert sind.

Indem beim erfindungsgemäßen Fusionsmodul zwei voneinander unabhängig und parallel arbeitende Spannungs- bzw. Injektions-Nachführregler, zugeordnet einerseits dem mathematischen Maschinenmodell und andererseits dem Injektionsverfahren, vorgesehen sind, können bei niedrigen Drehzahlen die Modell-Geschwindigkeitswerte die Injektions-Geschwindigkeitswerte im Kombinationsglied stabilisierend unterstützen, obgleich sie aufgrund zu schwacher Läufer-Rück-EMK für sich allein nicht mehr zur Lieferung von Antriebs-Geschwindigkeitswerten geeignet wären. Es wird der Weg zu einer Verbesserung der Geschwindigkeitsermittlung im niederen Drehzahlbereich eröffnet, erzielbar aufgrund der beiden parallel für das Maschinenmodell und das Injektionsverfahren arbeitenden Modell- und Injektions-Nachführregler. In weiterer optionaler Ausgestaltung sind die beiden Nachführregler über ihre jeweiligen Ausgänge im Kombinationsglied gekoppelt (entsprechend Anspruch 14, Merkmal c).

Weitere Einzelheiten, Merkmale, Merkmalskombinationen, Vorteile und Wirkungen auf der Basis der Erfindung ergeben sich aus der nachfolgenden Beschreibung eines bevorzugten Ausführungsbeispiels der Erfindung sowie aus der Zeichnung. Diese zeigt in (der einzigen)

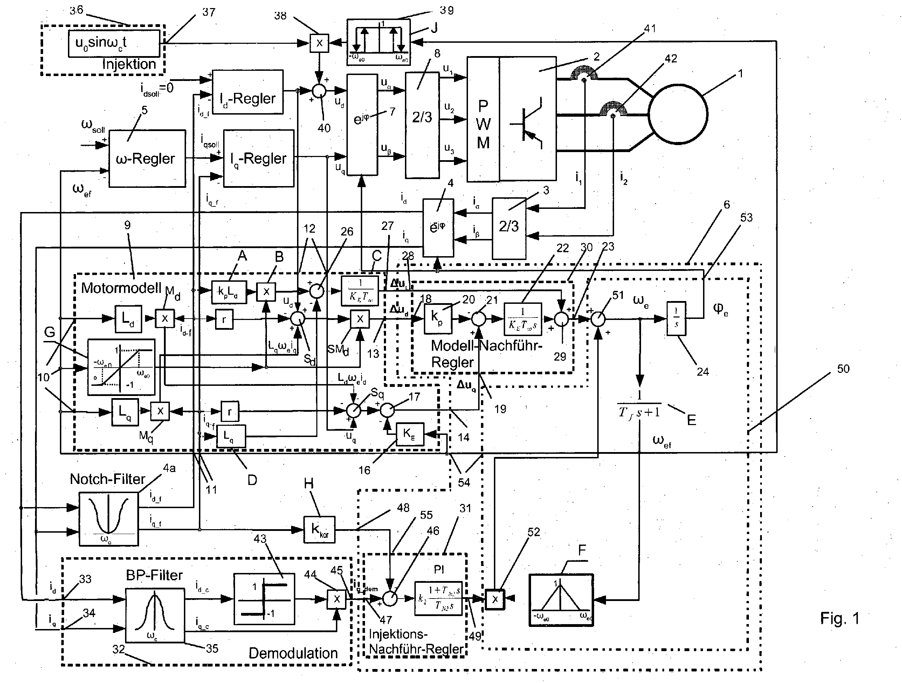

Figur 1 in schematischer Darstellung eine "sensorlose" Antriebsregelung mit einem erfindungsgemäßen Lage- und Geschwindigkeits-Ermittlungssystem in Form eines Blockdiagramms.

Gemäß Figur 1 ist der Stator 1 einer bürstenlosen elektrischen Maschine, beispielsweise eines Synchronmotors mit Permanentmagnet-Läufer (nicht gezeichnet), von einem auf der Basis von Pulsweitenmodulation (PWM) arbeitenden Umrichter 2 mit einem dreiphasigen Drehstrom betrieben. Für eine Stromregelung werden über Stromsensoren 41,42 vom Stator 1 die beiden Phasenströme i₁, i₂ abgegriffen bzw. gemessen, welche in einer 3-zu-2 Phasen-Transformationseinheit 3 auf ein statorbezogenes, orthogonales α, β-Koordinatensystem abgebildet werden. Im Zuge der Transformation werden zwei den Statorstrom repräsentierende α, β Vektorkomponenten i_{α}, i_{β} erzeugt und an eine zweite, nachgeordnete Koordinaten-Transformationseinheit 4 ausgegeben. Diese ist dazu ausgebildet, eine Koordinatentransformation vom statorbezogenen α,β-Koordinatensystem in ein rotorbezogenes d,q-Koordinatensystem mit der Ausgabe der Strom-Längs- und Quervektorkomponenten i_{d}, iq vorzunehmen. Diese Strom-Vektorkompenten werden einem Notch- bzw. Kerbfilter 4a mit einer mittigen Sperrfrequenz, die einer injizierten Träger-Kreisfrequenz ω_{c} (siehe Erläuterungen weiter unten) entspricht. Es dient dazu, die durch die Injektion erscheinenden hochfrequenten Anteile aus den Strom-Längs- und Quervektorkomponenten i_{d}, iq herauszufiltern. Die "nicht mehr verschmutzten" Strom-Vektorkomponenten i_{d-f}, i_{q-f} am Kerbfilterausgang vom Statorstrom werden als Istwerte den Längsstrom- und Querstromreglern I_{d}, I_{q} zum Soll-/Istwert-Vergleich mit entsprechenden Längs- und Querstrom-Sollwerten i_{dsoll}, i_{qsoll} zugeführt. Wie an sich in der Fachwelt üblich, wird die Längsstrom-Sollwertvorgabe i_{dsoll} auf Null gesetzt, während der Querstromregler die Sollwertvorgabe I_{qsoll} von einem vorgeordneten Geschwindigkeitsregler 5 empfängt. Dieser geht von einem Vergleich eines Drehzahlsollwerts ωₛₒₗₗ mit dem von einem Fusionsmodul 6 ausgegebenen Schätz- bzw. Ermittlungswert für eine elektrische, tiefpassgefilterte (siehe Block E) Drehzahl ω_{ef} aus. Aus dem Fusionsmodul 6 wird ferner ein ermittelter elektrischer Winkel ϕₑ ausgegeben und der zweiten Transformationseinheit 4 sowie einer zu dieser komplementären dritten Transformationseinheit 7 zugeführt. Die dritte Transformationseinheit 7 empfängt ferner die von den Stromreglern I_{d}, I_{q} vorgegebenen Längs- und Querspannungs-Vektorkomponenten u_{d}, u_{q} und bildet diese in das statorbezogene α, β-Koordinatensystem mit den vorgegebenen Spannungsvektorkomponenten u_{α}, u_{β} ab. Letztere Spannungsvektorkomponenten werden von einer nachgeordneten, 2-zu-3-Phasen Transformationseinheit 8 empfangen, welche die Spannungsvorgabe in drei dem Drehstromsystem entsprechende Phasen u₁, u₂, u₃ für den nachgeordneten Umrichter 2 umsetzt.

Gemäß Figur 1 ist dem Fusionsmodul 6 ein Motor-Modellierungsmodul 9 vorgeordnet. Dieses weist Eingangsschnittstellen 10 für die ermittelte, gefilterte Drehzahl ω_{ef}, Eingangsschnittstellen 11 für die gemessenen in das d,q-Koordinatensystem abgebildeten und kerbgefilterten Längs- bzw. Querströme i_{d-f}, i_{q-f} und Eingangsschnittstellen 12 für die im d,q-Koordinatensystem vorgegebenen Längs- und Querspannungen u_{d}, u_{q} auf. Ferner weist das Modellierungsmodul 9 eine erste Ausgangsschnittstelle 13 für die Längsspannungsabweichung Δu_{d} und eine zweite Ausgangsschnittstelle 14 für die Querspannungsabweichung Δu_{q} auf.

Gemäß Figur 1 wird die über die Drehzahl-Eingangsschnittstellen 10 dem Motormodell 9 zugeführte, ermittelte, gefilterte Drehzahl ω_{ef} mit mehreren separaten Proportionalgliedern gewichtet, deren Verstärkungen der EMK-Konstante K_{E}, der Motor-Längsinduktivität L_{d} und der Motor-Querinduktivität Lq entsprechen. Ferner wird die eingegebene Drehzahl ω_{ef} noch mit einem Begrenzungsglied G gewichtet. Dieses hat für MaschinenGeschwindigkeiten, die außerhalb eines Intervalls bzw. Fensters für den kleineren, dem Injektionsverfahren zugeordneten Geschwindigkeitsbereich von - ωₑ₀ bis +ωₑ₀ liegen, also dem dem Motormodell zugeordneten, größeren Geschwindigkeitsbereich angehören, Vorzeichen- bzw. Signumsfunktion. Wird die Maschinen-Geschwindigkeit bzw. -Drehzahl sehr klein, dann sorgt der Abschnitt mit der vorzugsweis konstanten Steigung des Begrenzungsglieds G dafür, dass ein unstabiles Hin- und Herschalten zwischen positivem und negativem Vorzeichen vermieden ist. Das Begrenzungsglied G trägt also dazu bei, im Bereich der niedrigeren, dem Injektionsverfahren zugeordneten Drehzahlen dafür zu sorgen, dass auch aus dem Motormodell weiterhin stabilisierende Beiträge zur Gesamt-Geschwindigkeitsermittlung geliefert werden.

Die Ausgänge der Induktivitäts-Proportionalglieder L_{d}, L_{q} sind jeweils mit einem eigens zugeordneten Multiplizierglied M_{d}, Mq verbunden. Die zweiten Eingänge der Multiplizierglieder M_{d}, Mq sind jeweils mit der entsprechenden der beiden Strom-Eingangsschnittstellen 11 für (kerbgefilterten) Längs- bzw. Querstrom i_{d_f}, i_{q_f} verbunden. Die jeweiligen Ausgänge der Multiplizierglieder M_{d}, Mq sind Längsspannungs- bzw. Querspannungs-Summiergliedern S_{d}, Sq jeweils mit negativem (M_{d}) und positivem Vorzeichen (Mq) zugeführt. Einem jeweils zweiten Eingang der Längs- bzw. Quer-Spannungssummierglieder S_{d}, Sq sind über die Spannungs-Eingangsschnittstellen 12 die Längs- bzw. Querspannungsvorgaben u_{d}, u_{q} mit jeweils positivem Vorzeichen zugeführt. Die beiden Spannungs-Summierglieder S_{d}, Sq besitzen jeweils noch einen zusätzlichen Negativ-Eingang (mit jeweils negativem Vorzeichen), denen ein jeweiliger Ausgang der zwei vorgeordneten Proportionalglieder mit der dem ohmschen Motorwiderstand entsprechenden Verstärkung r zugeführt ist. Die beiden ohmschen Proportionalglieder r gewichten, wie bereits weiter oben angesprochen, die durch das Kerbfilter 4a gelangten Strom-Vektorkomponenten i_{d_f}, i_{q_f} mit dem ohmschen Motorwiderstand.

Gemäß Figur 1 ist das Begrenzungsglied G eingangsseitig mit der Geschwindigkeits-Eingangsschnittstelle 10 und ausgangsseitig mit dem ersten Eingang eines Vorzeichen-Multipliziergliedes SM_{d} verbunden. Dessen zweiter Eingang kommuniziert mit dem Ausgang des Längsspannungs-Summiergliedes S_{d}, und der Ausgang des Vorzeichen-Multipliziergliedes SM_{d} steht mit der ersten Ausgangsschnittstelle 13 für die Längsvektorkomponente Δu_{d} der Spannungsabweichung in Verbindung. Dadurch lässt sich die Richtung des Läufers der elektrischen Maschine in die Berechnung des Lageermittlungsfehlers mit einbeziehen.

Gemäß Figur 1 fließt bei der Berechnung des Geschwindigkeitsermittlungsfehlers in Form der Quervektorkomponente Δu_{q} der Spannungsabweichung noch die EMK-Motorkonstante über ein mit entsprechender Verstärkung dimensioniertes Proportionalglied 16 mit ein. Das EMK-Proportionalglied ist dazu eingangsseitig mit der Drehzahl-Eingangsschnittstelle 10 verbunden. Ausgangsseitig ist das EMK-Proportionalglied 16 mit dem Minus-Eingang eines EMK-Summierglieds 17 verbunden, dessen Plus-Eingang mit dem Ausgang des Querspannungs-Summierglieds Sq kommuniziert. Der Ausgang des EMK-Summierglieds 17 geht direkt auf die zweite bzw. Querspannungsabweichungs-Ausgangsschnittstelle 14 des Modellierungsmoduls 9 zur Ausgabe des Geschwindigkeitsermittlungsfehlers an das nachgeordnete Fusionsmodul 6.

Gemäß Figur 1 umfasst das Maschinen- bzw. Motormodell 9 ferner Induktivitäts-Proportionalglieder A, D mit der Längs- bzw. Querinduktivität L_{d}, L_{q} als jeweiliger Verstärkungsfaktor. Wie zeichnerisch angedeutet, kann dem Induktivitätsproportionalglied A in Reihenschaltung noch ein weiteres Proportionalglied vor- oder nachgeschaltet sein, das einem gleich oder gleichartig dimensionierten Proportionalglied 20 entspricht, welches in dem dem Motormodell 9 zugeordneten Modell-Nachführregler (siehe unten) integriert ist und dort als "Lageregulierungsglied" interpretiert werden kann. Dem Ausgang des für die Längsvektorkomponente i_{d_f} des kerbgefilterten Statorstromes zuständigen Induktivitäts-Proportionalgliedes A ist ein Multiplizierglied B nachgeordnet, dessen zweiter Eingang mit dem Ausgang des bereits genannten, im wesentlichen Vorzeichenfunktion erfüllenden Begrenzungsglieds G verbunden ist, wodurch die Richtung der Läuferdrehung oder Läufer-Linearbewegung mit einbezogen wird. Der Ausgang des Multipliziergliedes B ist auf den Plus-Eingang eines Induktivitäts-Summiergliedes 26 gelegt, dessen zweiter Eingang, verknüpft mit negativem Vorzeichen, mit dem Ausgang des für die gefilterte Stromvektor-Querkomponente i_{q_f} zuständigen Induktivitäts-Proportionalgliedes D mit der Motor-Querinduktivität Lq als Proportionalverstärkung verbunden ist. Der sich am Ausgang des Induktivitäts-Summiergliedes 26 ergebende Differenzwert wird noch mit einem zugeordneten bzw. nachgeschalteten Proportionalglied C gewichtet, das entsprechend der maschinenspezifischen EMK (elektromotorische Kraft)-Konstante K_{E} und der Zeitkonstante T_{ω} dimensioniert und ausgangsseitig mit der dritten Ausgangsschnittstelle 27 für eine Induktivitäts-Spannungsabweichung Δu_{L} verbunden ist.

Gemäß Figur 1 umfasst das dem Motormodell 9 nachgeordnete Fusionsmodul 6 zwei simultan und voneinander unabhängig arbeitende Nachführregler, nämlich einen ersten Modell-Nachführregler 30 und einen zweiten Injektions-Nachführregler 31. Der Modell-Nachführregler 30 ist dem Motormodell 9, und der Injektions-Nachführregler 31 einem weiter unten beschriebenen Demodulationsmodul 32 zugeordnet.

Gemäß Figur 1 besitzt der Modell-Nachführregler 30 zwei Eingangsschnittstellen 18, 19 für die Längs- und Quervektorkomponenten Δu_{d}, Δu_{q} der im Modellierungsmodul 9 berechneten Spannungsabweichung. Die Längsvektorkomponente entspricht dem Lageermittlungsfehler, und die Quervektorkomponente dem Geschwindigkeitsermittlungsfehler. Die Eingangsschnittstelle 18 für die Längsspannungsabweichung Δu_{d} ist direkt dem Proportionalglied 20 zugeführt, welches mit der Proportionalverstärkung kp dimensioniert ist und ausgangsseitig mit dem Minus-Eingang eines ersten Nachführ-Summierglieds 21 verbunden ist. Dessen Plus-Eingang ist intern im Spannungs-Nachführ-Regler 30 direkt mit der Eingangsschnittstelle für die Querspannungsabweichung Δu_{q} verbunden. Das Summierergebnis wird ausgangsseitig einem ersten Integrationsglied 22 zugeführt, das erfindungsgemäß ohne Proportionalanteil ausgeführt und auf der Basis der EMK-Konstante K_{E} und einer Zeitkonstante T_{ω} bemessen ist. Der Ausgang des Integrationsgliedes 22, welches eine Integration der Differenz der Längs- und Querspannungsabweichung über die Zeit durchführt, ist dem Plus-Eingang eines zweiten Nachführ-Summiergliedes 29 zugeführt. Dessen zweiter Plus-Eingang ist intern im Modell-Nachführregler 30 mit dessen dritter Eingangsschnittstelle 28 verbunden. Letztere ist an die dritte Ausgangsschnittstelle 27 des Modellierungsmoduls 9 bzw. an den Ausgang des Proportionalgliedes C angelegt. Mithin wird der an der Ausgangsschnittstelle 27 des Modellierungsmoduls 9 ausgegebene Wert für die Induktivitäts-Spannungsabweichung Δu_{L} (welche die an sich von der Motorphysik geforderte interne Differenziation des Stromes im Motormodell ersetzt) der dritten Eingangsschnittstelle 28 des Modell-Nachführreglers 30 eingegeben. Intern wird die Spannungsabweichung Δu_{L} im Modell-Nachführregler 30 dem zweiten Plus-Eingang des zweiten Nachführ-Summierglieds 29 zugeführt. Dem anderen Plus-Eingang des zweiten Nachführ-Summierglieds ist der Ausgang des ersten Integrationsglieds 22 ebenfalls mit positiven Vorzeichen zugeordnet. Der Ausgang des zweiten Nachführ-Summierglieds führt zu einer Ausgangsschnittstelle 23 des Modell-Nachführreglers 30.

Gemäß Figur 1 liegen Eingangsschnittstellen 33, 34 des Demodulationsmoduls 32 parallel zum Kerbfilter 4a ebenfalls an den Ausgängen für rotorbezogene Vektorkomponenten i_{d}, iq der zweiten Koordinaten-Transformationseinheit 4 an. Die Eingangsschnittstellen 33, 34 führen zu einem Bandpass-Filter 35, dessen Durchlassfrequenz einer Träger-Kreisfrequenz ω_{c} entspricht. Auf der Basis dieser Träger-Kreisfrequenz ω_{c} arbeitet beziehungsweise schwingt eine Injektionssignalquelle 36, über deren Ausgang 37 ein Testsignal mit der Amplitude u₀ (beispielsweise 100 Volt bei Trägerfrequenz von beispielsweise 1 kHz) in die Statorströme i₁, i₂ eingekoppelt wird. Die Einkopplung erfolgt über den Eingang eines Multipliziergliedes 38, dessen zweiter Multiplikator-Eingang mit einem hysteresebehafteten Schaltglied 39 verknüpft ist. Dieses wird abhängig von der ermittelten, gefilterten Geschwindigkeit ω_{ef} angesteuert. Fällt der Betrag der ermittelten Geschwindigkeit ω_{ef} in ein zwischen den beiden Grenzfrequenzen ±ωₑ₀ gebildetes Fenster, gibt das Schaltglied den Wert eins an das Multiplizierglied 38 aus, und die Injektionssignalquelle 36 wird mit ihrem Ausgang 37 auf ein Reglerausgangs-Summierglied 40 durchgeschaltet. Dieses ist ausgangsseitig mit dem Längsspannungseingang der dritten Koordinaten-Transformationseinheit 7 verbunden, so dass über die beiden Transformationseinheiten 7, 8 ein zweckmäßig höherfrequentes Testsignal, welches die Träger-Kreisfrequenz ω_{c} enthält, über den Umrichter 2 in die Stromkreise des Stators 1 eingekoppelt und daraus über die beiden StromSensoren 41, 42 von der ersten Transformationseinheit 3 wieder abgegriffen werden kann. Liegt die gefilterte, ermittelte Antriebsgeschwindigkeit ω_{ef} außerhalb des genannten Geschwindigkeits-Fensters -ωₑ₀ - +ωₑ₀, wird durch Null-Ausgabe des Schaltglieds 39 die Verbindung des Injektionsausgangs 37 zur Regler-Summierstelle 40 unterbrochen, was bei höheren Antriebs-Geschwindigkeiten zur Vermeidung von Störungen aufgrund der höherfrequenten Träger-Kreisfrequenz ω_{c} zweckmäßig ist.

Da die Träger-Kreisfrequenz ω_{c} der Injektionssignalquelle 36 bekannt ist, lässt sich beim Demodulationsmodul 32 das Bandpassfilter 35 mit seinem Durchlass-Bereich auf diese Träger-Kreisfrequenz ω_{c} fokussieren. Infolgedessen stehen am Ausgang des Bandpass-Filters 35 Strom-Vektorkomponenten i_{d_c}, i_{q_c} zur Verfügung, die als Frequenzanteile im Wesentlichen nur die Träger-Kreisfrequenz ω_{c} entsprechend dem über die Reglerausgangs-Summierstelle 40 eingespeisten Testsignal enthalten. Die vom Bandpassfilter herausgefilterte Strom-Vektor-Querkomponente i_{qc} entspricht einem von der magnetischen Anisotropie abhängigen Korrektursignal, worin Information über die Läuferlage enthalten ist. Wegen weiterer Einzelheiten und theoretischer Hintergründe darf auf die bereits oben genannte Fundstelle von O.C. Ferreira und R. Kennel "Encoderless control of ...", insbesondere dortige Figuren 3 und 4 mit zugehöriger Beschreibung, verwiesen werden. Danach ist es vorteilhaft, ein alternierendes Testsignal mit der hohen Träger-Kreisfrequenz ω_{c} nur der Spannungsvektor-Längskomponente u_{d} aus dem entsprechenden Reglerausgang einzuprägen bzw. zu überlagern, um nachteilige Einflüsse auf die für die Drehmomenterzeugung relevanten Strom/Spannungsvektor-Querkomponenten iq, u_{q}, zu vermeiden. Nach dem Herausfiltern der Trägerfrequenzstrom-Querkomponente i_{qc} im Demodulator 32 wird diese bezüglich der Trägerfrequenzstrom-Längskomponente i_{d_c} gleichgerichtet, was mittels eines Signumsgliedes 43 und eines Multipliziergliedes 44 erfolgt. Dazu wird die Längskomponente i_{d_c} des Trägerstromvektors aus dem Bandpass-Filter 35 dem Eingang des Signumsglieds 43 zugeführt. Dessen Ausgang ist mit einem Multiplikatoreingang verbunden. Der andere Multiplikatoreingang des Multiplizierglieds 44 ist mit dem Bandpass-Ausgang für die Querkomponente des Trägerstroms verbunden. Der Ausgang des Multiplizierglieds bildet gleichzeitig die Ausgangsschnittstelle 45 des Demodulators 32 für die demodulierten Hochfrequenzanteile i_{q_dem} des Querstroms iq.

In der eingangs genannten Fundstelle geben Ferreira und Kennel auf Seite 1966 in Verbindung mit Figur 6 den Hinweis, dass mit zunehmender mechanischer Last der Stator-Grundstrom zunimmt. Dadurch wird die Orientierung der Anisotropie, wie sie vom Injektions-Nachführregler 31 detektiert wird, verschoben, was in einen Winkelfehler resultiert, der durch eine Verschiebung des Sättigungsmaximums durch die Ständerstromvektor-Querkomponente verursacht wird, welche für die Erzeugung des Drehmoments relevant ist. Ein solcher fehlerhafter Versatz kann jedoch durch eine einfache lineare Adaption des Drehmoment erzeugenden Laststromes kompensiert werden. Dem dient das in Figur 1 gezeichnete Proportionalglied kₖₒᵣ (Block H) mit Fehlerkorrekturfunktion. Das Korrektur-Proportionalglied H wird mit dem über das Kerbfilter von Anteilen der Träger-Kreisfrequenz ω_{c} gereinigten Stator-Querstrom i_{q_f} eingangsseitig gespeist, und am Ausgang des Proportionalgliedes H steht ein stromabhängiges Kompensationssignal zur Verfügung. Nun lässt sich der Einfluss eines lastabhängigen Fehlers kompensieren, indem das stromabhängige Kompensationssignal aus dem Proportionalglied H einem Minus-Eingang eines Eingangs-Summiergliedes 46 zugeführt wird, dessen Plus-Eingang mit der Ausgangsschnittstelle 45 des Demodulators 32 verbunden ist.

Für den Injektions-Nachführregler 31 bildet die EingangsSummierstelle 46 die erste Eingangsstation bzw. die Stromwert-Eingangsschnittstelle 47 für den demodulierten Querstrom i_{q_dem}, und 48 bezeichnet die Eingangsschnittstelle für das stromabhängige Kompensationssignal. Das Summierergebnis wird ausgangsseitig auf einen Proportional-Integralregler PI geführt. Dessen Ausgang bildet die Ausgangsschnittstelle 49 des Injektions-Nachführreglers 31.

Gemäß Figur 1 umfasst das Fusionsmodul 6 auch eine Kombinationseinrichtung 50, welche Eingangsschnittstellen für die Ausgangsschnittstellen 23, 49 der beiden Nachführregler 30, 31 aufweist. Die Ausgangsschnittstelle 23 des Modell-Nachführreglers 30 ist direkt einem Plus-Eingang einer Fusions-Summierstelle 51 zugeführt. Der Ausgang 49 des Injektions-Nachführreglers 31 ist mit dem zweiten Plus-Eingang der Fusions-Summierstelle 51 mittelbar über einen Gewichtungsmultiplizierer 52 gekoppelt. Der zweite Multiplikator-Eingang des Gewichtungsmultiplizierers 52 ist mit dem Ausgang eines Betragsbildungsgliedes F verbunden. Dieses besitzt gemäß gezeichnetem Ausführungsbeispiel eine geschwindigkeitsabhängige Dach-Kennlinie, die aus zwei Schrägabschnitten zusammengesetzt ist, welche mit betragsmäßiger Zunahme der Geschwindigkeit abfallen beziehungsweise jeweils eine fallende/negative Steigung aufweisen. Die beiden vorzugsweise zueinander symmetrischen Abschnitte treffen sich in dem Gewichtungswert "1" bei der Geschwindigkeit Null in einem Winkel. Ferner weist die Kennlinie des Betragsbildungsgliedes F zwei Nullstellen auf, die den beiden genannten GrenzGeschwindigkeiten ±ωₑ₀ entsprechen. Liegt der Betrag der ermittelten, gefilterten Geschwindigkeit ω_{ef} am Eingang des Betragsbildungsgliedes F außerhalb des sich von -ωₑ₀ bis +ωₑ₀ erstreckenden Geschwindigkeitsintervalls, wird der Ausgang 49 des Injektions-Nachführreglers 31 mit "Null" gewichtet bzw. ausgeblendet. Andernfalls wird der Injektions-Nachführregler-Ausgang 49 um so stärker gewichtet, je mehr sich die ermittelten Geschwindigkeitsbeträge |ω_{ef}| dem Wert Null annähern bzw. je kleiner der Antriebsgeschwindigkeits-Betrag wird. Dafür sorgt die geschwindigkeitsabhängige, vom Geschwindigkeitswert Null bidirektional jeweils abfallende Kennlinie des Betragsbildungsgliedes F. Dessen Eingang wird vom Ausgang der Fusions-Summierstelle 51 aus gespeist, vorzugsweise mittelbar über ein zwischengeschaltetes Tiefpass-Filter bzw. PT₁-Glied E, über welches aus der ermittelten Antriebs-Geschwindigkeit ωₑ am Ausgang der Fusions-Summierstelle 51 eine gefilterte, ermittelte Antriebs-Geschwindigkeit ω_{ef} erzeugt wird. Während bei Antriebs-Geschwindigkeits-Beträgen größer als der Grenz-Geschwindigkeitsbetrag ±ωₑ₀ der Injektions-Nachführregler 31 an seinem Ausgang 49 durch entsprechende Gewichtung ausgeblendet wird, bleibt bei kleinen Geschwindigkeiten innerhalb des genannten Fensters bzw. Intervalls von -ωₑ₀ bis +ωₑ₀ der Modell-Nachführregler 30 grundsätzlich weiter aktiv bzw. mit seinem Ausgang 23 zur Fusions-Summierstelle 51 durchgeschaltet. Dadurch liefert der Modell-Nachführregler auch bei kleinen Drehzahlen, wo an sich die Maschinen-Rück-EMK zur Auswertung und Ermittlung der Läuferlage zu schwach ist, weiterhin Beiträge, welche die bei niedrigen Geschwindigkeiten relevanten Werte aus dem Injektions-Nachführregler 31 stabilisieren und ergänzen. Die Genauigkeit ist so für Geschwindigkeitswerte innerhalb des genannten Geschwindigkeits-Intervalls -ωₑ₀ bis +ωₑ₀ erhöht.

Ferner wird intern in der Kombinationseinrichtung 50 die am Ausgang der Fusions-Summierstelle 51 zur Verfügung stehende, ermittelte Antriebs-Geschwindigkeit/Drehzahl noch einem zweiten Integrationsglied 24 zugeführt, welches daraus in an sich bekannter Weise die elektrische Antriebs-Lage bzw. Winkellage ϕₑ per Integration über die Zeit berechnet und über eine Lage-Ausgangsschnittstelle 53 an die zweite und dritte Koordinaten-Transformationseinheit 4, 7 ausgibt, wodurch die Transformation zwischen dem stator- und rotorbezogenen Koordinatensystemen gesteuert wird. Die nach dem Tiefpass oder PT₁-Glied E ermittelte, gefilterte Antriebs-Geschwindigkeit ω_{ef} steht am Ausgang 54 der Kombinationseinrichtung 50 bzw. des Fusionsmoduls 6 zur weiteren Rückkopplung an das Modellierungsmodul 9 (Geschwindigkeits-Eingangsschnittstellen 10) sowie an den Geschwindigkeitsregler 5 zur Verfügung.

### Bezugszeichenliste

- 1: Stator
- 2: Umrichter
- 3: 3-zu-2 Phasen-Transformationseinheit
- 4: zweite Koordinaten-Transformationseinheit
- 4a: Kerbfilter
- i_{α}, i_{β}: Vektor-Stromkomponenten im statorbezogenen α, β -Koordinatensystem
- i_{d}, i_{q}: Vektor-Stromkomponenten im rotorbezogenen d,q-Koord inatensystem
- i_{dsoll}, i_{qsoll}: Längs- bzw. Querstromsollwert
- I_{d}, I_{q}: Längs- und Querstromregler
- 5: Geschwindigkeitsregler
- 6: Fusionsmodul
- ωₛₒₗₗ: Drehzahlsollwert
- E: Tiefpass
- ω_{ef}: ermittelte, gefilterte Drezahl
- ϕₑ: ermittelte elektrische Winkellage
- 7: dritter Koordinaten-Transformationseinheit
- u_{d}, u_{q}: Längs- bzw. Querspannungsvorgaben
- u_{α}, u_{β}: Spannungsvorgabe im α, β-Koordinatensystem (statorbezogen)
- 8: 2-zu-3 Phasen-Transformationseinheit
- u₁, u₂, u₃: Spannungsvorgabe für drei Phasen
- 9: Motor-Modellierungsmodul
- 10: Drehzahl-Eingangsschnittstellen
- 11: Strom-Eingangsschnittstellen
- 12: Spannungs-Eingangsschnittstelle
- 13, 14: erste und zweite Ausgangsschnittstelle für intern berechnete Spannungsabweichungs-Vektorkomponenten
- K_{E}: EMK-Konstante
- G: Begrenzungsglied
- M_{d}, Mq: Multiplizierglieder
- S_{d}, Sq: Spannungssummierglieder
- VS_{d}, VS_{q}: Vorsummierglieder
- r: Proportionalglied für Motorwiderstand
- sL_{d}, sL_{q}: Längs-, Querstrom-Differenzierglied
- SM_{d}: Vorzeichen-Multiplizierglied
- Δu_{d}: Abweichungs-Längsvektorkomponente der Spannungsab- weichung
- Δu_{q}: Abweichungs-Quervektorkomponente der Spannungsabweichung
- 16: EMK-Proportionalglied
- 17: EMK-Summierglied
- 18, 19: Eingangsschnittstellen für Längs- und Querspannungsabweichung
- 20: Proportionalglied
- 21: erstes Nachführ-Summierglied
- 22: erstes Integrationsglied
- 23: erste Nachführregler-Ausgangsschnittstelle
- 24: zweites Integrationsglied
- 25: zweite Nachführregler-Ausgangsschnittstelle
- A,D: Induktivitäts-Proportionalglieder
- B: Multiplizierglied
- 26: Induktivitäts-Summierglied
- C: Proportionalglied
- 27: dritte Ausgangsschnittstelle
- 28: dritte Eingangsschnittstelle
- 29: zweites Nachführ-Summierglied
- 30: Modell-Nachführregler
- 31: Injektions-Nachführregler
- 32: Demodulationsmodul
- 33, 34: Eingangsschnittstellen
- 35: Bandpass-Filter
- ω_{c}: Träger-Kreisfrequenz
- 36: Injektionssignalquelle
- 37: Ausgang
- 38: Multiplizierglied
- 39: Schaltglied
- 40: Reglerausgangs-Summierglied
- 41 , 42: Stromsensor
- 43: Signumsglied
- 44: Multiplizierglied
- 45: Ausgangsschnittstelle
- i_{q_dem}: demodulierte Hochfrequenzanteile des Querstroms i_{q}
- H: Proportionalglied zur Lastfehler-Korrektur
- 46: Eingangssummierstelle
- 47,48: Eingangsschnittstellen
- PI: Proportional-Integralregler
- 49: Ausgangsschnittstelle
- 50: Kombinationseinrichtung
- 51: Fusions-Summierstelle
- 52: Gewichtungsmultiplizierer
- 53: Lage-Ausgangsschnittstelle
- 54: Geschwindigkeits-Ausgang der Kombinationseinrichtung beziehungsweise des Fusionsmoduls
- F: Betragsbildungsglied
- 55: Lastfehler-Korrektureingang

## Patentansprüche

1. Verfahren zur Ermittlung der elektrischen Antriebs-Geschwindigkeit (ω_{ef}) und/oder -Lage (ϕₑ) bei einem Permanentmagnet-Läufer einer elektrischen bürstenlosen Linear- oder Rotations-Maschine aus einer Messung eines mehrphasigen Statorstroms (i₁,i₂) insbesondere für einen elektrischen Antriebsregelkreis,
a) wobei die Geschwindigkeits-Ermittlung nahtlos über den gesamten Geschwindigkeitsbereich einschließlich Stillstand des Läufers erfolgt,
b) unter Verwendung eines für höhere Geschwindigkeiten geeigneten mathematischen Maschinenmodells (9), wobei aus dem Einfluss einer den den Statorstrom (i₁,i₂) beeinflussenden Läufer-Rück-EMK auf die Läufer-Geschwindigkeit (ω_{ef}) und/oder -Lage (ϕₑ) geschlossen wird,
c) und unter Verwendung eines für niedrigere Geschwindigkeiten bis einschließlich Stillstand geeigneten Injektionsverfahrens (32), wobei stromführende Statorleiter mit einer Testsignalquelle (36,37) gekoppelt werden, und die resultierenden Statorströme (i₁,i₂) auf lageabhängige Anisotropien in der Magnetstruktur der elektrischen Maschine hin ausgewertet und/oder gefiltert werden, woraus auf die Läufer-Geschwindigkeit (ω_{ef}) und/oder -Lage (ϕₑ) geschlossen wird,
***dadurch gekennzeichnet, dass***
*bei Verfahrensabschnitt b) aus dem Einfluss der den den Statorstrom (i₁,i₂) beeinflussenden Läufer-Rück-EMK ein entsprechender Modell-Geschwindigkeitswert (13,19,23) erzeugt wird,*
*und bei Verfahrensabschnitt c) im Zuge des Schließens auf die Läufer-Geschwindigkeit (ω_{ef})* und/oder *-Lage (ϕ*ₑ*) ein entsprechender Injektions-Geschwindigkeitswert (45,49) erzeugt wird,*
d) und in einem Kombinationsglied (50,51) *eine* einander ergänzender Fusion der Modell- und Injektionsgeschwindigkeitswerte (23,49) zur ermittelten Antriebs-Geschwindigkeit (ωₑ,ω_{ef}) *erfolgt*,
e) wobei korrespondierend mit der Zunahme der ermittelten Antriebs-Geschwindigkeit (ωₑ,ω_{ef}) der Einfluss oder die Beiträge der Injektions-Geschwindigkeitswerte (45,49) gegenüber denen der Modell-Geschwindigkeitswerte (13,19,23) abgeschwächt werden,
f) *indem* zur Abschwächung die Injektions-Geschwindigkeitswerte (45,49) mit Faktoren gewichtet (F) werden, deren Werte mit zunehmender Geschwindigkeit abnehmen,
g) und die gewichteten Injektions-Geschwindigkeitswerte mit den Modell-Geschwindigkeitswerten (13,19,23) in dem Kombinationsglied (50,51) fusioniert werden,
h) und das Kombinations-Ergebnis aus dem Kombinationsglied als die ermittelte Antriebsgeschwindigkeit (ωₑ,ω_{ef}) verwendet wird.

2. Verfahren nach Anspruch 1, **dadurch gekennzeichnet, dass** die Gewichtungsfaktoren entsprechend einer Betragsbildungsfunktion (F) mit der ermittelten Antriebsgeschwindigkeit (ω_{ef}) als Argument gewählt werden, wobei die Betragsbildungsfunktion (F) mit zunehmenden Beträgen der Antriebsgeschwindigkeit (ω_{ef}) vorzugsweise linear abnimmt.

3. Verfahren nach Anspruch 1 oder 2, **gekennzeichnet durch** eine Grenzgeschwindigkeit (ωₑ₀), ab welcher die Gewichtungs-Faktoren Null betragen und/oder die Beiträge der Injektions-Geschwindigkeitswerte (45,49) unterdrückt werden.

4. Verfahren nach einem der vorangehenden Ansprüche, **gekennzeichnet durch** eine Grenzgeschwindigkeit (ωₑ₀), ab welcher die Testsignalquelle (36,37) abgeschaltet wird.

5. Verfahren nach einem der vorangehenden Ansprüche, **dadurch gekennzeichnet, dass** die die gewichteten Injektions-Geschwindigkeitswerte (49,52) mit den Modell-Geschwindigkeifswerten (23) in dem Kombinationsglied (51) miteinander addiert werden.

6. Verfahren nach einem der vorangehenden Ansprüche, **dadurch gekennzeichnet, dass** die am Ausgang des Kombinationsglieds (51) ermittelten Geschwindigkeitswerte (ωₑ) einer PT₁ - oder Tiefpass-Filterung (E) unterworfen werden.

7. Einrichtung zur Ermittlung der Antriebs-Geschwindigkeit (ωₑ,ω_{ef}) und/oder Lage (ϕₑ) eines Permanentmagnet-Läufers einer elektrischen bürstenlosen Linear- oder Rotations-Maschine nahtlos über den gesamten Geschwindigkeitsbereich einschließlich Stillstand des Läufers, insbesondere für einen Antriebsregelkreis, geeignet zur Durchführung des Ermittlungs-Verfahrens nach einem der vorangehenden Ansprüche, mit folgenden Funktionskomponenten:
a) mit einem schaltungs- und/oder programmtechnisch realisierten Maschinen-Modellierungsmodul (9), das aufweist:
aa) Eingangs-Schnittstellen (10,11,12; i_{d},i_{q};u_{d},u_{q}) für einen Strom (i₁,i₂) des Stators beziehungsweise Ständers (1) der elektrischen Maschine und/oder einer vorgegebenen Spannung und/oder für die ermittelte Geschwindigkeit (ω_{ef}),
ab) und Ausgangs-Schnittstellen (13,14) für Spannungs-Werte (Δu_{d}, Δu_{q}) entsprechend einer den Statorstrom (i₁;i₂) beeinflussenden Läufer-Rück-EMK,
b) mit einer Testsignal- beziehungsweise Inj.ektionsquelle (36,37), die mit den Stromleitern des Stators (1) zur Einprägung eines Testsignals mit einer vorbestimmten Trägerfrequenz (ω_{c}) gekoppelt ist,
c) mit einem schaltungs- und/oder programmtechnisch realisierten Demodulationsmodul (32), das eingangsseitig mit Stromwerten (i_{d},i_{q}) für den Statorstrom gekoppelt ist, ein auf die Testsignal-Trägerfrequenz (ω_{c}) ausgerichtetes Bandpass-Filter (35) aufweist, dem eingangsseitig die Strom-Werte (i_{d},i_{q}) zugeführt sind, und wobei der Ausgang des Bandpass-Filters (35) einer Ausgangsschnittstelle (45) des Demodulationsmoduls für einen Demodulations-Stromwert (i_{q_}dem) zugeführt ist,
d) und mit einem schattungs- und/oder programmtechnisch realisierten Fusionsmodul (6), das eingangsseitig mit den Ausgangsschnittstellen (13,14,27;45) des Modellierungs- und Demodulationsmoduls (9;32) gekoppelt ist und ausgangsseitig eine Ausgabeschnittstelle (54) für die ermittelte Antriebs-Geschwindigkeit (ω_{ef}) aufweist,
**dadurch gekennzeichnet, dass**
e) das Fusionsmodul (6) einen ersten, mit den Ausgangsschnittstellen des Modellierungsmoduls (13,14,27) gekoppelten Modell-Nachführregler (30) und einen zweiten, mit der Strom-Ausgangsschnittstelle (45) des Demodulationsmoduls (32) gekoppelten Injektions-Nachführregler ((31) aufweist, welche beiden jeweils Ausgangsschnittstellen (23;49) wenigstens für Modell- beziehungsweise Injektions-Geschwindigkeitswerte aufweisen,
f) die Nachführregler-Ausgangsschnittstelle (49) für die Injektions-Geschwindigkeitswerte zu deren Gewichtung mit einem Ausgang eines Betragsbildungsglieds (F) gekoppelt ist, das mit einer Übertragungsfunktion versehen ist, die eine über ein betragsmäßig steigendes Eingangssignal (ω_{ef}) beziehungsweise Argument fallende Kurve aufweist,
g) der Eingang des Betragsbildungsglieds (F) mit einer Ausgabeschnittstelle des Fusionsmoduls (6) oder einer Fusionssummierstelle (51) für die ermittelte Antriebs-Geschwindigkeit (ω_{ef}) verbunden ist,
h) der vom Betragsbildungsglied (F) beeinflusste oder gewichtete Ausgang (49) für Injektions-Geschwindigkeitswerte und die Nachführregler-Ausgangsschnittstelle (23) für die Modell-Geschwindigkeitswerte gemeinsam einem Kombinationsglied oder der Fusionssummierstelle (51) zugeführt sind,
i) der Ausgang des Kombinationsglieds oder der Fusionssummierstelle (51) unmittelbar oder mittelbar mit einer Ausgabesschnittstelle (54) des Fusionsmoduls (6) für die ermittelte Antriebs-Geschwindigkeit (ω_{ef}) verbunden ist.

8. Ermittlungseinrichtung nach Anspruch 7, **dadurch gekennzeichnet, dass** das Modellierungsmodul (9) eine Geschwindigkeits-Eingangsschnittstelle (10) aufweist, die mit der Ausgabesschnittstelle (54) des Fusionsmoduls (6) für die ermittelte Antriebs-Geschwindigkeit (ω_{ef}) verbunden ist.

9. Ermittlungseinrichtung nach Anspruch 7 oder 8, **gekennzeichnet durch** ein geschwindigkeitsabhängiges Schaltglied (39) mit Hysterese-Kennlinie, das mit der Ausgabeschnittstelle (54) für die ermittelte Antriebs-Geschwindigkeit (ω_{ef}) verbunden und zum Ansprechen bei einer oder mehreren vorbestimmten Grenzgeschwindigkeiten (ωₑ₀) ausgebildet ist, um die Kopplung der Injektionsquelle (36,37) mit den Stator-Stromleitern (i₁;i₂) zu unterbrechen.

10. Ermittlungseinrichtung nach einem der vorangehenden Ansprüche, mit einem zu Sperrung einer Träger-Kreisfrequenz (ω_{c}) beispielsweise der Testsignal- beziehungsweise Injektionsquelle (36,37) ausgebildeten Kerbfilter (4a), **dadurch gekennzeichnet, dass** das Kerbfilter (4a) eingangsseitig parallel zum Demodulationsmodul (32) mit den Stromwerten (i_{d},i_{q}) für den Statorstrom und/oder dem Ausgang einer Koordinaten-Transformationseinheit (4) zur Abbildung des Statorstroms in ein rotorbezogenes d,q-Koordinatensystem gekoppelt ist.

11. Ermittlungseinrichtung nach Anspruch 10, **dadurch gekennzeichnet, dass** das Kerbfilter (4a) ausgangsseitig mit einem oder mehreren Stromreglern des Antriebsregelkreises verbunden ist.

12. Ermittlungseinrichtung nach Anspruch 10 oder 11, **dadurch gekennzeichnet, dass** das Kerbfilter (4a) zumindest mit einem Teil seines Ausgangs (i_{d_f},i_{d_q}) mit dem Eingang eines Proportionalgliedes (H), ausgebildet zur Lastfehlerkorrektur, verbunden ist, das ausgangsseitig mit einem Eingang (55) des Injektions-Nachführreglers (31) verbunden ist.

13. Ermittlungseinrichtung nach einem der Ansprüche 7 bis 12, ***dadurch gekennzeichnet, dass** das Fusionsmodul (6)* schaltungs- und/oder programmtechnisch realisiert ist mit eingangsseitigen Schnittstellen (18,19,28) für Spannungs- und Stromwerte (Δu_{d}, Δu_{q},Δu_{L},i_{q_}dem), mit einem Nachführ-Reglerwerk (30,31), um aus den Spannungs- und Stromwerten eine elektrische Antriebslage (ϕₑ) und/oder - geschwindigkeit (ω_{ef}) einer elektrischen Maschine zu ermitteln, und mit Ausgangsschnittstellen (54) für die ermittelte Antriebslage (ϕₑ) und/oder - geschwindigkeit (ω_{ef}), *wobei* das Nachführ-Reglerwerk (30,31) umfasst:
a) wenigstens zwei voneinander unabhängig arbeitende Modell- und Injektions-Nachführregler (30,31), von denen der eine Modell-Nachführregler (30) den Spannungswerten (Δu_{d}, Δu_{q},Δu_{L})und der andere Injektions-Nachführregler (31) den Stromwerten (i_{q_dem}) zugeordnet ist, und beide dazu ausgebildet sind, aus den Spannungs- beziehungsweise Stromwerten (Δu_{d}, Δu_{q},ΔU_{L},i_{q_}dem) Geschwindigkeitswerte (ω_{ef},ωₑ) zu generieren

14. *Ermittlungseinrichtung* nach Anspruch 13, weiter **gekennzeichnet durch**:
b) ein Betragsbildungsglied (F) mit einer über sein betragsmäßig zunehmendes Eingangssignal (ω_{ef}) fallenden Übertragungsfunktion, welches Betragsbildungsglied (F) eingangsseitig mit der Ausgangsschnittstelle (54) für die ermittelte Antriebsgeschwindigkeit (ω_{ef}) verbunden und ausgangsseitig mit dem Ausgang (49) des den Stromwerten (i_{q_dem}) zugeordneten Injektions-Nachführreglers (31) zur Gewichtung von dessen generierten Geschwindigkeitswerten (49) gekoppelt ist,
c) ein Kombinationsglied (51), dem der mit dem Betragsbildungsglied (F) gekoppelte und/oder gewichtete Injektions-Nachführregler-Ausgang (49) und der Ausgang des den Spannungswerten (Δu_{d}, Δu_{q},Δu_{L}) zugeordneten Modell-Nachführreglers (30) gemeinsam zugeführt sind,
d) und eine Verbindung des Ausgangs des Kombinationsglieds (51) unmittelbar oder mittelbar mit der Ausgabesschnittstelle (54) des Fusionsmoduls (6) für die ermittelte Antriebs-Geschwindigkeit (ω_{ef}).

15. *Ermittlungseinrichtung* nach Anspruch 13 oder 14, **dadurch gekennzeichnet, dass** dem Ausgang des Kombinationsglieds (51) und der Ausgabesschnittstelle (54) des Fusionsmoduls (6) ein Tiefpass oder ein PT₁-Übertragungsglied (E) zwischengeschaltet ist.

16. *Ermittlungseinrichtung* nach einem der vorangehenden Ansprüche, **dadurch gekennzeichnet, dass** das Kombinationsglied (51) als Summierstelle ausgeführt ist.

17. *Ermittlungseinrichtung* nach Anspruch 16, **dadurch gekennzeichnet, dass** die Summierstelle (51) additive Eingänge mit positivem Vorzeichen für den gewichteten Ausgang (52) des Injektions-Nachführreglers (31) für den zugeführten Strom (i_{q_dem}) und den Ausgang (23) des den Spannungswerten (Δu_{d}, Δu_{q},Δu_{L}) zugeordneten Modell-Nachführreglers (30) aufweist.

18. *Ermittlungseinrichtung* nach einem der vorangehenden Ansprüche, **dadurch gekennzeichnet, dass** das Betragsbildungsglied (F) eine oder mehrere Nullstellen aufweist, welche einer oder mehreren elektrischen Grenzgeschwindigkeiten (ωₑ₀) des Läufers entsprechen.

19. Ermittlungseinrichtung nach einem der *vorangehenden* Ansprüche, ***dadurch gekennzeichnet, dass** das Maschinen-Modellierungsmodul (9) folgendes umfasst:*
a) Eingangs-Schnittstellen (11) für in ein Läuferbezogenes d,q-Koordinatensystem transformierte Maschinen-Längs- und - Quervektorkomponenten (i_{d},i_{q} u_{d},u_{q};) vom Strom und einer vorgegebenen Spannung sowie für eine extern ermittelte Maschinen-Geschwindigkeit (ω_{ef}),
b) und mindestens zwei Ausgangs-Schnittstellen (13,14) für in das d,q-Koordinatensystem transformierte Längs- und Quervektorkomponenten (Δu_{d}, Δu_{q}) einer intern berechneten Spannungsabweichung,
c) und mehrere Proportionalglieder (r,A,D) zur Gewichtung der Strom-Vektorkomponenten (id,iq) mit einem ohmschen Stator- oder Maschinenwiderstand (r) und eine oder mehrere Stator- oder Maschineninduktivitäten (L_{d},L_{q}),
*d) und* ein Begrenzerglied (G), das an seinem Eingang mit der Eingangs-Schnittstelle (10) für die extern ermittelte Maschinen-Geschwindigkeit (ω_{ef}) verbunden und ausgangsseitig über ein Multiplizierglied (B) mit dem Ausgang eines Proportionalgliedes (A,D) verknüpft ist, das die Strom-Längs- oder Quervektorkomponente (i_{d}, iq) mit der Längs- oder Querinduktivität (L_{d},L_{q}) gewichtet.

20. *Ermittlungseinrichtung* nach Anspruch 19, **gekennzeichnet durch** ein oder zwei Grenzgeschwindigkeiten (ωₑ₀), ab welcher oder welchen das Begrenzerglied (G) einen Maximal- und/oder Minimalwert ausgibt.

## Claims

1. Procedure for determining the electrical drive speed (ω_{ef}) and/or position (ϕₑ) in a permanent magnet rotor of a brushless electrical linear or rotation machine from a measurement of a multi-phase stator current (i₁,i₂) especially for an electrical drive regulation circuit,
a) whereby the speed is seamlessly determined over the entire speed range, including standstill of the rotor,
b) while using a mathematical rotor model (9) suitable for higher speeds, whereby from the influence of a rotor back EMF that affects the stator current (i₁,i₂) conclusions are made about the rotor speed (ω_{ef}) and/or position (ϕₑ),
c) and while using an injection procedure (32) suitable for lower speeds up to and including standstill, whereby a current-carrying stator winding is coupled with a test signal source (36, 37) and the resulting stator currents (i₁,i₂) are assessed and/or filtered for position-sensitive anisotropies in the magnetic structure of the electrical rotor, from which conclusions can be made on the rotor speed (ω_{ef}) and/or position (ϕₑ)
**characterized in that**
in step b) from the influence of the rotor back EMF that affects the stator current (i₁,i₂) an appropriate model speed value (13,19,23) is generated, and in step c) while making conclusions on the rotor speed (ω_{ef}) and/or position (ϕₑ) an appropriate injection speed value (45,49) is generated,
d) and a fusion of the model and injection speed values (23, 49) occurs in a combination element (50, 51) that supplement each other for the estimated drive speed (ωₑ,ω_{ef}),
e) whereby corresponding with the increase in estimated drive speed (ωₑ,ω_{ef}) the influence or the contributions of the injection speed values (45,49) relative to those of the model speed values (13,19,23) is weakened,
f) as for weakening, the injection speed values (45,49) are weighted with coefficients (F) whose values decline with increasing speed,
g) and the weighted injection speed values are fused with the model speed values (13,19,23) in the combination element (50,51),
h) and the combined result from the combination element is used as the estimated drive speed (ωₑ,ω_{ef}).

2. Procedure according to claim 1, **characterized in that** the weighting coefficients corresponding to an absolute value formation function (F) with the estimated drive speed (ω_{ef}) are selected as the argument, whereby the absolute value function (F) declines, preferably in linear fashion, with increasing amounts of the drive speed (ω_{ef}).

3. Procedure according to claim 1 or 2, **characterized by** a limit speed (ωₑ₀), from which the weighting factors amount to zero and/or the contributions of the injection speed values (45,49) are suppressed.

4. Procedure according to one of the foregoing claims, **characterized by** a limit speed (ωₑ₀), from which the test signal source (36,37) is switched off.

5. Procedure according to one of the foregoing claims, **characterized in that** the weighted injection speed values (49,52) are added with the model speed values (23) in the combination element (51).

6. Procedure according to one of the foregoing claims, **characterized in that** the speed values (ωₑ) estimated at the output of the combination element (51) are subjected to a PT₁ or low pass filtration (E).

7. Device for estimating the drive speed (ωₑ,ω_{ef}) and/or position (ϕₑ) of a permanent magnet rotor in a brushless electrical linear or rotating machine in seamless fashion over the entire speed range, including standstill of the rotor, especially for a drive regulation circuit, suitable for carrying out the estimation procedure according to one of the foregoing claims, with the following functional components:
a) with a switching and/or programming- implemented rotor modeling module (9), that has:
aa) input interfaces (10,11,12; i_{d},i_{q};u_{d},u_{q}) for a current (i₁,i₂) of the stator or stator (1) of the electrical rotor and/or a voltage demand and/or for the estimated speed (ω_{ef}),
ab) and output interfaces (13,14) for voltage values (Δu_{d}, Δu_{q}) corresponding to a rotor back-EMF that influences the stator current (i₁;i₂),
b) with a test signal or injection source (36, 37) that is coupled with the winding of the stator (1) for injecting a test signal with a preset carrier frequency (ω_{c}),
c) with a circuit and/or program-implemented demodulation module (32), which is coupled on the input side with current values (i_{d},i_{q}) for the stator current, has a bandpass filter (35) adjusted to the test signal carrier frequency (ω_{c}), to which on the input side the current values (i_{d},i_{q}) are forwarded, and whereby the output of the bandpass filter (35) is forwarded to an output interface (45) of the demodulation module for a demodulation current value (i_{q_dem)},
d) and with a circuit and/or programming-implemented fusion module (6) which on the input side is coupled with the output interfaces (13,14,27;45) of the modeling and demodulation module (9;32) and on the output side has an output interface (54) for the estimated drive speed (ω_{ef}), **characterized in that**
e) the fusion module (6) has a first model tracking regulator (30) coupled with the output interfaces of the modeling module (13,14,27) and has a second injection tracking regulator (31) coupled with the current output interface (45) of the demodulation module (32) both of which have respective output interfaces (23; 49) at least for model and injection speed values, respectively,
f) the tracking regulator output interface (49) for the injection speed values is coupled with an output of an absolute value formation element (F) for weighting them, that is provided with a transfer function, that over an input signal (ω_{ef}) or argument that increases in absolute value possesses a falling curve,
g) the input of the absolute value formation element (F) is connected with an output interface of the fusion module (6) or a fusion summating block (51) for the estimated drive speed (ω_{ef}),
h) the output (49) influenced or weighted by the absolute value formation element (F) for injection speed values and the tracking regulator output interface (23) for the model speed values are jointly forwarded to a combination element or the fusion summating block (51),
i) the output of the combination element or of the fusion summating block (51) is connected directly or indirectly with an output interface (54) of the fusion module (6) for the estimated drive speed (ω_{ef}).

8. Estimation device according to claim 7, **characterized in that** the modeling module (9) has a speed input interface (10) that is connected with the output interface (54) of the fusion module (6) for the estimated drive speed (ω_{ef}).

9. Estimation device according to claim 7 or 8, **characterized by** a speed-sensitive switching element (39) with a hysteresis characteristic curve, that is linked with the output interface (54) for the estimated drive speed (ω_{ef}) and is embodied for response with one or more preset limit speeds (ωₑ₀) to interrupt the coupling of the injection source (36,37) with the stator current conduits (i₁,i₂).

10. Estimation device according to one of the foregoing claims, with a notch filter (4a) embodied for suppressing a carrier circuit frequency (ω_{c}) for example of the test signal or injection source (36,37), **characterized in that** the notch filter (4a) on the input side is coupled parallel to the demodulation module (32) with the current values (i_{d},i_{q}) for the stator current and/or the output of a coordinate transformation unit (4) for representing the stator current in a rotor-related d,q reference frame.

11. Estimation device according to claim 10, **characterized in that** the notch filter (4a) on the output side is connected with one or more current regulators of the drive regulator circuit.

12. Estimation device according to claim 10 or 11, **characterized in that** the notch filter (4a) is connected at least with one part of its output (i_{d_f},i_{d_q}) to the input of a proportional element (H), embodied for load error correction, which on the output side is connected with an input (55) of the injection tracking regulator (31).

13. Estimation device according to one of claims 7 to 12, **characterized in that** the fusion module (6) is implemented in circuit and/or programming with input-side interfaces (18,19,28) for voltage and current values (Δu_{d}, Δu_{q}, Δu_{L},i_{q_dem}), with a tracking regulator device (30,31), to estimate from the voltage and current values an electrical drive position (ϕₑ) and/or speed (ω_{ef}) of an electrical rotor, and with output interfaces (54) for the estimated drive position (ϕₑ) and/or speed (ω_{ef}), whereby the tracking regulator device (30,31) comprises:
a) at least two model and injection tracking regulators (30, 31) that operate independent of each other, of which the one model tracking regulator (30) is assigned to the voltage values (Δu_{d}, Δu_{q}, Δu_{L}) and the other injection tracking regulator (31) is assigned to the current values (i_{q_dem}) and both are embodied to generate speed values (ω_{ef}, ωₑ) from the voltage or current values (Δu_{d}, Δu_{q},Δ u_{L},i_{q_dem}).

14. Estimation device according to claim 13, further **characterized by**:
b) an absolute value formation element (F) with a falling transmission function over its input signal (ω_{ef}) that is increasing in terms of amount, which absolute value formation element (F) is coupled on the input side with the output interface (54) for the estimated drive speed (ω_{ef}) and on the output side with the output (49) of the injection tracking regulator (31) assigned to the current values (i_{q_dem}) for weighting of their generated speed values (49),
c) a combination element (51), to which are jointly forwarded the injection tracking regulator output (49) coupled and/or weighted with the absolute value formation element (F), and the output of the model tracking regulator (30) assigned to the voltage values (Δu_{d}, Δu_{q}, Δu_{L}),
d) and a connection of the output of the combination element (51) directly or indirectly with the output interface (54) of the fusion module (6) for the estimated drive speed (ω_{ef}).

15. Estimation device according to claim 13 or 14, **characterized in that** a low pass or a PT₁- transition element (E) is placed between the output of the combination element (51) and the output interface (54) of the fusion module (6).

16. Estimation device according to one of the foregoing claims, **characterized in that** the combination element (51) is embodied as a summating block.

17. Estimation device according to claim 16, **characterized in that** the summating block (51) has additive inputs with a positive sign for the weighted output (52) of the injection tracking regulator (31) for the forwarded current (i_{q_dem}) and the output (23) of the model tracking regulator (30) assigned to the voltage values (Δu_{d}, Δu_{q}, Δu_{L}).

18. Estimation device according to one of the foregoing claims, **characterized in that** the absolute value formation element (F) has one or more zero points, which correspond to one or more electrical limit speeds (ωₑ₀) of the rotor.

19. Estimating device according to one of the foregoing claims 7 to 12, **characterized in that** the rotor modeling module (9) comprises the following:
a) Input interfaces (11) for rotor direct and quadrature vector components (i_{d},i_{q} u_{d},u_{q};) of current, transformed into a rotor-related d,q reference frame, and for a voltage demand as well as for an externally estimated rotor speed (ω_{ef}),
b) and at least two output interfaces (13,14) for direct and quadrature vector components (Δu_{d}, Δu_{q}) of an internally computed voltage deviation, transformed into the d, q reference frame,
c) and multiple proportional elements (r,A,D) for weighting of the current vector components (id,iq) with an ohmic stator or rotor resistance (r) and one or more stator or rotor inductances (L_{d},L_{q}),
d) and a limiting element (G), which at its input is linked with the input interface (10) for the externally estimated rotor speed (ω_{ef}) and is linked on the output side via a multiplier element (B) with the output of a proportional element (A,D) that weights the current direct or quadrature component (i_{d}, iq) with the direct or quadrature inductance (L_{d},L_{q}).

20. Estimation device according to claim 19, **characterized by** one or two limit speeds (ωₑ₀), starting at which the limiter element (G) outputs a maximum and/or minimum value.

## Revendications

1. Procédé pour déterminer la vitesse électrique d'entraînement (ω_{ef})
et/ou la position électrique d'entraînement (ϕₑ) dans un rotor à aimant permanent d'une machine électrique linéaire ou tournante sans balai sur la base d'une mesure d'un courant de stator polyphasé (i₁, i₂), en particulier pour un circuit de régulation électrique d'un entraînement,
a) dans lequel la détermination de la vitesse s'effectue sans interruption sur toute la plage de vitesse du rotor, y compris à l'arrêt,
b) comprenant l'utilisation d'un modèle mathématique de machine (9) approprié pour les hautes vitesses, dans laquelle, de l'influence d'une f.c.e.m. du rotor qui influe sur le courant de stator (i₁, i₂), on déduit la vitesse (ω_{ef}) et/ou la position (ϕₑ) du rotor,
c) et, comprenant l'utilisation d'un procédé d'injection (32) approprié pour les basse vitesses, jusqu'à et y compris à l'arrêt, dans laquelle des conducteurs de stator qui conduisent le courant sont couplés avec une source de signal de test (36, 37) et les courants de stator résultants (i₁, i₂) sont évalués sous l'aspect des anisotropies fonction de la position qui sont présentes dans la structure magnétique de la machine électrique et/ou filtrés, et d'où l'on déduit la vitesse(ω_{ef}) et/ou la position (ϕₑ) du rotor,
**caractérisé en ce que**
dans la partie b) du procédé, à partir de l'influence de la f.c.e.m. du rotor qui influe sur le courant de stator (i₁, i₂), on produit une valeur de vitesse modèle correspondante (13, 19, 23),
et, dans la partie c) du procédé, au cours de la déduction de la vitesse (ω_{ef}) et/ou de la position (ϕₑ) du rotor, on produit une valeur de vitesse d'injection correspondante (45, 49),
d) et, dans un élément combinateur (50, 51), s'effectue une fusion avec complémentation mutuelle des valeurs de vitesse modèle et de vitesse d'injection (23, 49), qui donne la vitesse d'entraînement déterminée (ωₑ, ω_{ef}),
e) dans lequel, en fonction de l'accroissement de la vitesse d'entraînement déterminée (ωₑ, (ω_{ef}), l'influence ou les contributions des valeurs de vitesse d'injection (45, 49) est ou sont affaiblie(s) relativement à celle ou celles des valeurs de vitesse modèle (13, 19, 23),
f) en ce sens que, pour l'affaiblissement, les valeurs de vitesse d'injection (45, 49) sont pondérées avec des facteurs (F) dont les valeurs décroissent avec l'accroissement de la vitesse,
g) et les valeurs de vitesse d'injection pondérées sont fusionnées avec les valeurs de vitesse modèle (13, 19, 23) dans l'élément combinateur (50, 51),
h) et le résultat de la combinaison qui est fourni par l'élément combinateur est utilisé comme vitesse d'entraînement déterminée (ωₑ, (ω_{ef}).

2. Procédé selon la revendication 1, **caractérisé en ce que** les facteurs de pondération sont choisis en appliquant une fonction de formation de quantité (F) avec pour argument la vitesse d'entraînement déterminée (ω_{ef}), et **en ce que** la fonction de formation de quantité (F) décroît, de préférence linéairement, avec l'accroissement des grandeurs de la vitesse d'entraînement (ω_{ef}).

3. Procédé selon la revendication 1 ou 2, **caractérisé par** une vitesse limite (ωₑ₀) à partir de laquelle les facteurs de pondération valent zéro et/ou les contributions des valeurs de vitesse d'injection (45, 49) sont affaiblies.

4. Procédé selon l'une des revendications précédentes, **caractérisé par** une vitesse limite (ωₑ₀), à partir de laquelle la source de signal de test (36, 37) est déconnectée.

5. Procédé selon l'une des revendications précédentes, **caractérisé en ce que** les valeurs de vitesse d'injection pondérées (49, 52) et les valeurs de vitesse modèle (23) sont additionnées les unes aux autres dans l'élément combinateur (51).

6. Procédé selon l'une des revendications précédentes, **caractérisé en ce que** les valeurs de vitesse (ωₑ) déterminées à la sortie de l'élément combinateur (51) sont soumises à un filtrage PT₁ ou passe-bas (E).

7. Dispositif pour la détermination de la vitesse d'entraînement (ωₑ, ω_{ef}) et/ou de la position (ϕₑ) d'un rotor à aimant permanent d'une machine électrique linéaire ou tournante sans balai, sans interruption sur toute la plage de vitesse, y compris à l'arrêt, du rotor, en particulier pour un circuit de régulation d'entraînement, approprié pour la mise en oeuvre du procédé de détermination selon l'une des revendications précédentes, et comprenant les éléments fonctionnels suivants :
a) un module de modélisation de machine (9) réalisé en technique de circuit et/ou de programme, et qui comporte :
aa) des interfaces d'entrée (10, 11, 12 ; i_{d}, i_{q}, U_{d}, U_{q}) pour un courant (i₁, i₂) du stator ou de l'inducteur (1) de la machine électrique et/ou pour une tension prédéterminée et/ou pour la vitesse déterminée (ω_{ef}),
ab) et des interfaces de sortie (13, 14) pour des valeurs de tension (Δu_{d}, Δu_{q}) correspondant à une f.c.e.m. du rotor qui influe sur le courant du stator (i₁ ; i₂),
b) une source de signal de test ou d'injection (36, 37) qui est couplée avec les conducteurs de courant du stator (1) pour appliquer un signal de test ayant une fréquence porteuse (ω_{c}) prédéterminée,
c) un module de démodulation (32) réalisé en technique de circuit et/ou de programme qui est couplé, côté entrée, avec des valeurs de courant (i_{d}, iq) pour le courant de stator, comporte un filtre passe-bande (35) réglé sur la fréquence porteuse (ω_{c}) du signal de test, et auquel les valeurs de courant (i_{d}, iq) sont appliquées côté entrée, la sortie du filtre passe-bande (35) étant transmise à une interface de sortie (45) du module de démodulation pour une valeur de courant de démodulation (i_{q_dem}),
d) et un module de fusion (6) réalisé en technique de circuit et/ou de programme, qui est couplé, côté entrée, avec les interfaces de sortie (13, 14, 27 ; 45) du module de modélisation et de démodulation (9 ; 32) et qui, côté sortie, comporte une interface de sortie (54) pour la vitesse d'entraînement déterminée (ω_{ef}),
**caractérisé en ce que**
e) le module de fusion (6) comporte un premier régulateur suiveur modèle (30) couplé avec les interfaces de sortie du module de modélisation (13, 14, 27) et un deuxième régulateur suiveur d'injection couplé avec l'interface de sortie de courant (45) du module de démodulation (32), lesquels comportent des interfaces de sortie (23 ; 49) au moins pour des valeurs de vitesse modèle ou d'injection respectivement,
f) l'interface de sortie de régulateur suiveur (49) pour les valeurs de vitesse d'injection est couplée, pour la pondération de ces valeurs, avec une sortie d'un élément de formation de quantité (F) qui est doté d'une fonction de transmission présentant une courbe qui décroît avec la croissance en valeur d'un signal d'entrée (ω_{ef}) ou d'un argument,
g) l'entrée de l'élément de formation de quantité (F) est reliée à une interface de sortie du module de fusion (6) ou d'un totalisateur de fusion (51) pour la vitesse d'entraînement déterminée (ω_{ef}),
h) la sortie (49) pour les valeurs de vitesse d'injection qui est influencée ou pondérée par l'élément de formation de quantité (F) et l'interface de sortie (23) du régulateur suiveur pour les valeurs de vitesse modèle sont transmises ensemble à un élément combinateur ou au totalisateur de fusion (51),
i) la sortie de l'élément combinateur ou du totalisateur de fusion (51) est reliée directement ou indirectement à une interface de sortie (54) du module de fusion (6) pour la vitesse d'entraînement déterminée (ω_{ef}).

8. Dispositif de détermination selon la revendication 7, **caractérisé en ce que** le module de modélisation (9) comporte une interface d'entrée de vitesse (10) qui est reliée à l'interface de sortie (54) du module de fusion (6) pour la vitesse d'entraînement déterminée (ω_{ef}).

9. Dispositif de détermination selon la revendication 7 ou 8, **caractérisé par** un élément de commutation (39) fonction de la vitesse possédant une courbe caractéristique d'hystérésis, qui est relié à l'interface de sortie (54) pour la vitesse d'entraînement déterminée (ω_{ef}) et est conçu pour déclencher à une ou plusieurs vitesses limites prédéterminées (ωₑ₀) pour interrompre le couplage de la source d'injection (36, 37) avec les conducteurs de courant (i₁, i₂) du stator.

10. Dispositif de détermination selon l'une des revendications précédentes, comprenant un filtre coupe-bande (4a) conçu pour bloquer une fréquence angulaire porteuse (ω_{c}), par exemple de la source de signal de test ou d'injection (36, 37), **caractérisé en ce que** le filtre coupe-bande (4a) est couplé, côté entrée, en parallèle avec le module de démodulation (32), avec les valeurs de courant (i_{d}, iq) pour le courant de stator et/ou avec la sortie d'une unité de transformation de coordonnées (4) pour la représentation du courant de stator dans un système de coordonnées d,q rapporté au rotor.

11. Dispositif de détermination selon la revendication 10, **caractérisé en ce que** le filtre coupe-bande (4a) est relié côté entrée à un ou plusieurs régulateurs de courant du circuit de régulation d'entraînement.

12. Dispositif de détermination selon la revendication 10 ou 11, **caractérisé en ce que** le filtre coupe-bande (4a) est relié, au moins par une partie de sa sortie (i_{d_f}, i_{d_q}), à l'entrée d'un élément proportionnel (H), conçu pour la correction des défauts de charge, lequel est relié côté sortie à une entrée (55) du régulateur suiveur d'injection (31).

13. Dispositif de détermination selon l'une des revendications 7 à 12, **caractérisé en ce que** le module de fusion (6) est réalisé en technique de circuit et/ou de programme, et comporte des interfaces côté entrée (18, 19, 28) pour des valeurs de tension et de courant (Δu_{d}, Δu_{q}, Δu_{L}, i_{q_dem}), un élément régulateur suiveur (30, 31) destiné à déterminer, sur la base des valeurs de tension et de courant, une position d'entraînement électrique (ϕₑ) et/ou une vitesse électrique (ω_{ef}) d'une machine électrique, et des interfaces de sortie (54) pour la position (ϕₑ) et/ou la vitesse (ω_{ef}) d'entraînement déterminées, l'élément régulateur suiveur (30, 31) comprenant :
a) au moins deux régulateurs suiveurs modèles et d'injection (30, 31) travaillant indépendamment l'un de l'autre, dont le premier régulateur suiveur modèle (30) est affecté aux valeurs de tension (Δu_{d}, Δu_{q}, Δu_{L}) et l'autre régulateur suiveur d'injection (31) est affecté aux valeurs de courant (i_{q_dem}), et qui sont tous deux conçus pour générer des valeurs de vitesse (ω_{ef}, ωₑ) sur la base des valeurs de tension et de courant (Δu_{d}, Δu_{q}, Δu_{L}, i_{q_dem}).

14. Dispositif de détermination selon la revendication 13, **caractérisé en outre par** :
b) un élément de formation de quantité (F) possédant une fonction de transmission qui décroît avec la croissance en valeur de son signal d'entrée (ω_{ef}), lequel élément de formation de quantité (F) est couplé, côté entrée, avec l'interface de sortie (54) pour la vitesse d'entraînement déterminée (ω_{ef}), et côté sortie, avec la sortie (49) du régulateur suiveur d'injection (31) affecté aux valeurs de courant (i_{q_dem}) pour la pondération des valeurs de vitesse (49) qu'il a générées,
c) un élément combinateur (51) auquel sont transmises ensemble la sortie (49) du régulateur suiveur d'injection, couplée et/ou pondérée avec l'élément de formation de quantité (F), et la sortie du régulateur suiveur modèle (30) affecté aux valeurs de tension (Δu_{d}, Δu_{q}, Δu_{L}),
d) et une liaison directe ou indirecte entre la sortie de l'élément combinateur (51) et l'interface de sortie (54) du module de fusion (6) pour la vitesse d'entraînement déterminée (ω_{ef}).

15. Dispositif de détermination selon la revendication 13 ou 14, **caractérisé en ce qu'**à la sortie de l'élément combinateur (51) et à l'interface de sortie (54) du module de fusion (6), est intercalé un filtre passe-bas ou un élément de transmission PT₁ (E).

16. Dispositif de détermination selon l'une des revendications précédentes, **caractérisé en ce que** l'élément combinateur (51) est réalisé sous la forme d'un totalisateur.

17. Dispositif de détermination selon la revendication 16, **caractérisé en ce que** le totalisateur (51) comporte des entrées additives de signe positif pour la sortie pondérée (52) du régulateur suiveur d'injection (31), pour le courant amené (i_{q_dem}) et pour la sortie (23) du régulateur suiveur modèle (30) affecté aux valeurs de tension (Δu_{d}, Δu_{q}, Δu_{L}).

18. Dispositif de détermination selon l'une des revendications précédentes, **caractérisé en ce que** l'élément de formation de quantité (F) présente une ou plusieurs positions zéro qui correspondent à une ou plusieurs vitesses électriques limites (ωₑ₀) du rotor.

19. Dispositif de détermination selon l'une des revendications précédentes, **caractérisé en ce que** le module de modélisation de machine (9) comprend les éléments suivants :
a) des interfaces d'entrée (11) pour des composantes longitudinales et transversales, relativement à la machine, de vecteurs (i_{d}, i_{q}, u_{d}, u_{q}) du courant et d'une tension prédéterminée, transformées en un système de coordonnées d,q rapporté au rotor, et ainsi que pour une vitesse de machine (ω_{ef}) déterminée en externe,
b) au moins deux interfaces de sortie (13, 14) pour des composantes longitudinales et transversales de vecteurs (Δu_{d}, Δu_{q}) d'un écart de tension calculé en interne qui sont transformées en le système de coordonnées d,q,
c) plusieurs éléments proportionnels (r, A, D) destinés à la pondération des composantes de vecteurs de courant (id, iq), comprenant une résistance ohmique du stator ou de la machine (r) et une ou plusieurs inductances du stator ou de la machine (L_{d}, L_{q}),
d) et un élément limiteur (G) qui est relié à son entrée à l'interface d'entrée (10) pour la vitesse de machine (ω_{ef}) déterminée en externe et, à sa sortie, par l'intermédiaire d'un élément multiplicateur (B), à la sortie d'un élément proportionnel (A, D) qui pondère la composante longitudinale ou transversale du vecteur du courant (id, iq) avec l'inductance longitudinale ou transversale (L_{d}, L_{q}).

20. Dispositif de détermination selon la revendication 19, **caractérisé par** une ou deux vitesses limites (ωₑ₀) à partir de laquelle ou desquelles l'élément limiteur (G) délivre une valeur maximale et/ou une valeur minimale.
